# EUROPEAN PATENT SPECIFICATION

(11) **EP 2 177 783 B1**
(45) Date of publication and mention of the grant of the patent: **07.03.2018**
(21) Application number: 09173296.6
(22) Date of filing: 16.10.2009
(51) Int. Cl.: F16F 9/02

(54) **A safety apparatus for gas springs**
Sicherheitsvorrichtung für Gasfedern
Appareil de sécurité pour des ressorts à gaz

(30) Priority: 17.10.2008 TR 200807829
(43) Date of publication of application: 21.04.2010
(73) Proprietor: Destek otomotiv yan sanayi ve ticaret Anonim sirketi, 16159 Bursa (TR)
(72) Inventor: Yigit, Süreyya, 16159, Bursa (TR); Özkan, Sabahattin, 16159, Bursa (TR)
(74) Representative: Yamankaradeniz, Kemal

(56) References cited:
- EP-A1- 1 241 373
- DE-A1-102006 036 264
- US-B2- 7 270 318

## Description

### Technical Field

The invention relates to the apparatus referred to as gas spring or gas spring for die, and to the safety apparatus formed inside a gas spring, which safety apparatus prevents the excessive pressure increase as a result of increasing temperature in a closed pressurized container with fixed volume and/or variable volume, and as a result of excessive course in a pressurized container with a closed variable volume.

### Background of the Invention

Gas springs are the systems with tested reliability, providing ease of use. They may readily perform the safe loading and easy lifting operations. These are among the most preferred members, because of the controlled pressure imparted on the connection elements owing to the speed control and shock absorbance effect, as compared to the spiral springs, and also easy assembly, compact dimensions, exhibition of only a minor variation in the loading curve and having a wide field of use.

All the gas springs have an initial force owing to the pressure inside thereof beginning from the first contact of the load. Initial force forms against a low extent of mechanical compression. This force is called the F0 force. This force varies in the gas springs, depending on the model selected. On the other hand, this value is always zero in the mechanical springs.

Since there is present a high pressure inside the gas springs, they may withstand great amounts of force. In other words, it is possible to have only a single gas spring perform a duty, which would otherwise take many mechanical springs to be carried out. This in turn provides advantages with respect to problems related to the place of use, maintenance, assembly-disassembly and the cost.

There are many patent applications related to the gas springs. Among these, there is the patent application no. EP 0427468 A1 filed on the date 01.11.1990 by Walls, Bernard Joseph.

Other applications include the patent applications no. US 5386975, US 6971303 and US 7270318.

In the existing gas springs, the pressurized gas is filled in order to obtain the desired force on the shaft inside the body. In this way, a gas spring with preliminary tension is obtained. This system is filled in accordance with the permitted pressure. Also, according to the permitted course, the shaft is pushed towards the body to provide a decrease in the volume, which will in turn lead to the increased pressure and consequently to an increase in the force.

In case the user attempts to perform a course that is in excess of the permitted course while the shaft follows its course during the use of the gas spring, the interior gas pressure will excessively increase, and also the system may lead to an explosion, as a result of the deformation to occur on the body. The resulting fragmentation effects will cause the personnel injuries.

As another negative situation, the system will normally heat up by means of the gas compression and internal frictions, during the operation up to 80-100 C. However, the gas pressure will substantially rise due to the operating conditions or the conditions like fire. In such a case, the risk of explosion is again involved, because of the excessive pressure increase of the gas.

The existing safety systems comprise a high number of members. For this reason, they are both expensive and very complicated. Further, there is the problem of application on the pressurized containers with small volume and thin walls. As a result, such systems may not be used on a wide scale.

In many of the existing systems, particularly the gas spring body is destroyed. Such destruction does not eliminate the risk of explosion. Also, no solution has been able to be found for the temperature increase in the existing systems.

### Description of the Invention

The object of the invention is, contrary to the existing techniques described above, to enable the release of the pressurized gas by means of a deformation of only the safety member, without the main body of the gas spring for die being deformed. In this way, the risk of explosion is eliminated.

An object of the invention is to enable an extremely simple thermal and mechanical application for the safety member. Its production is simple and economical.

Another object of the invention is to bring the pressurized system back to the usable condition, by way of easy removal and replacement, like a fuse, of the security member, on the condition that there is no damage in the main body and the shaft upon the release of the pressurized gas.

Another object of the invention is to provide the ability to utilize the thermal and mechanical safety members in combination or in a separate manner.

Another object of the invention is to provide a safety member having smaller dimensions as compared to the existing systems. Safety member includes no movable part. Therefore, a condition like jamming is not encountered.

In order to achieve the aforesaid objects, the invention comprises at least one safety channel formed on the inner surface of the carrier body and/or the outer surface of the neck bearing, and a safety elevation formed to provide the exit of the pressurized gas from said safety channel and to act via the top surface of the neck bearing, thereby providing the downward movement of the neck bearing.

In order to achieve the aforesaid objects, the invention comprises a safety screw having a gas outlet channel, where the force is applied via the cutting surface on the shock surface (12.1), and a gas release channel in which said screw is positioned.

In order to achieve the aforesaid objects, the top surface of the neck bearing is positioned at a higher elevation than the top surface of the carrier body.

In order to achieve the aforesaid objects, a gas release gap is formed on the carrier body and said gap is filled with a material, which melts under the influence of the predetermined temperature and is unable to endure the impact of the high pressure.

In order to achieve the aforesaid objects, a gas release gap is formed on said carrier body, a safety screw with a length greater than the wall thickness of the carrier body is positioned in said gap, said screw has a gas outlet channel, the length distance of said channel is greater than the wall thickness of the carrier body, and the back surface of said screw has a closed surface.

### The Figures to Aid in An Understanding of the Invention

**Figure-1** is the two-dimensional cross-sectional front view of the gas spring in a normal position with a safety channel formed thereon.
**Figure-2** is the two-dimensional front view of the condition in which the force has been imparted on the gas spring shaft and the safety channel has been activated to enable the release of the pressurized gas.
**Figure-3** is the close-up cross-sectional view of the condition in which the safety elevation and safety channel according to the invention have been formed on the shaft and main body.
**Figure-4** is the close-up cross-sectional view of the safety channel in a state in which it is formed on the neck bearing.
**Figure-5** is a close-up view of the condition in which the force has been applied on the gas spring shaft and at the same time, said force has been applied on the neck bearing and the release of the gas has been enabled.
**Figure-6** is a two-dimensional front view of another alternative embodiment formed on the gas spring body.
**Figure-7** is a two-dimensional front view of the gas spring shaft in a state in which the force has been applied thereon.
**Figure-8** is the close-up two-dimensional front view of a cutting zone formed on the neck bearing and the safety screw entrapped in this zone.
**Figure-9** is a representative view of the condition in which the safety screw within the cutting zone has been destroyed as a result of the application of the force on the neck bearing and the gas inside the gas spring has been discharged.
**Figure-10** is a two-dimensional cross-sectional view of the shaft lower surface in a state in which it is imparting pressure on the safety screw. This embodiment is not according to the invention.
**Figure-11** is a two-dimensional representative cross-sectional view of the condition in which the shaft lower surface has applied pressure on the safety screw and has broken apart the end section of the screw. This embodiment is not according to the invention.
**Figure-12** is a two-dimensional view taken as a side section of the safety screw along with the soldered surface formed at the end part thereof.
**Figure-13** is a representative view of the condition in which the force has been applied via the neck bearing on the soldered surface formed at the end section of the safety screw.

**Part Numbers**

| | | | |
|---|---|---|---|
| **1.** | Carrier body | **11.** | Outlet channel |
| **1.1** | Gas gap | **12.** | Safety Screw |
| **1.2** | Inner surface | **12.1** | Shock surface |
| **1.3** | Top surface | **12.2** | Rear surface |
| **2.** | Shaft | **13.** | O-ring |
| **2.1** | Lower surface | **14.** | Thermal Solder |
| **2.2** | Pressure gap | **15.** | Gas Outlet Channel |
| | | **16.** | Cutting Channel |
| **3.** | Neck bearing | **16.1** | Cutting surface |
| **3.1** | Outer surface | | |
| **3.2** | Top surface | **17.** | Cutting Edge |
| **3.3** | Shock surface | | |
| | | | |
| **4.** | Seal Ring | **18.** | Gas release gap |
| **5.** | Sealing element | **19.** | Pressurized Gas |
| **6.** | Wire ring | **20.** | Operating surface |
| **7.** | Filling kit | | |
| **8.** | Safety elevation | | |
| **9.** | Safety channel | | |
| **10.** | Corner Radius | | |

### Detailed Description of the Invention

With regard to its components concerning the state of the art, the invention comprises a carrier body (1) with a gas gap (1.1) formed inside, where the pressurized gas (19) is stored by means of the filling kit (7), a shaft (2) moved upwards and downwards in a linear manner within the gas gap (1.1) of said carrier body (1), and the seal rings (4), wire ring (6) and the neck bearing (3) positioned between said carrier body (1) and the operating surfaces (20) of the shaft (2).

With regard to the innovative features and the components that exhibit difference as compared to the state of the art, the invention comprises at least one safety channel (9) formed on the inner surface (1.2) of the carrier body (1) and/or the outer surface (3.1) of the neck bearing (3), and a safety elevation (8) formed to provide the exit of the pressurized gas (19) from said safety channel (9) and to act via the top surface (3.2) of the neck bearing (3), thereby providing the downward movement of the neck bearing (3).

The invention also comprises at least one sealing element (5) positioned next to the safety channels (9) formed on the inner surface (1.2) of said carrier body (1) and the outer surface (3.1) of the neck bearing (3), the surfaces with radius (10) formed on the safety channel (9), and an outlet channel (11) formed between said carrier body (1) and the neck bearing (3).

The invention also comprises a cutting channel (16) having a cutting surface (16.1) formed on said neck bearing (3); a safety screw (12) having the gas outlet channel (15), on the shock surface (12.1) of which the force is applied via said cutting surface (16.1); a gas release channel (18) where this screw (12) is positioned; the o-ring (13) formed on said safety screw (12); and a pressure gap (2.2) formed to act on the shock surface (12.1) of said safety screw (12) via the shock surface of the neck bearing (3), wherein the shaft (2) lower surface (2.1) of the safety screw (12) and/or the lower surface of the neck (3) is/are cut by means of the cutting edge (17). (18) A thermal solder (14) positioned inside of the safety screw (12) positioned inside said gas release channel (18).

**The safety apparatus operates in the manner described below:** In case a pressure that is in excess of the recommended course and force is applied on the shaft (2), which is enabled to perform linear motion by means of a pressure force inside the carrier body (1) (see Figure-3), the force F pushes also the neck bearing (3) along with the shaft (2), in the direction a. Upon the movement of the neck bearing (3) in the direction a, the safety channel (9) of the neck bearing (3) reaches a position where it is in alignment with the sealing element (5) (see Figure-5). When said event of alignment takes place, the sealing element (5) falls into a deactivated position, and thus the gas inside the gas gap (1.1) is enabled to be discharged. In this manner, the release of the gas takes place without the destruction of the carrier body (1). The action of the force F on the neck bearing (3) is enabled by means of a safety elevation (8) formed completely on the neck bearing (3).

According to the manner of operation of another safety apparatus, there is formed a safety screw (12) on the carrier body (1) (see Figure-6 and 7). The safety screw is subjected to deformation during an excessive course, hence it serves to provide the release of the pressurized gas (19) inside, in a safe manner. This is a member, which is usually partly hollowed on the inside such that it may be easily deformed, yet is impermeable. Upon the movement of the neck bearing (3) in the direction b, as a result of the application of force on the neck bearing (3) via the safety elevation (8), a force is imparted via the cutting surface (16.1) of the cutting channel (16) on the end section of the safety screw (12) seated within the cutting channel (16) (see Figure-8), and the screw (12) is enabled to be broken (see Figure-9).

As an alternative to the embodiment described above, owing to the formation of a pressure gap (2.2) between, again, preferably between the neck bearing (3) and the shaft (2) (see Figure-12), the screw (12) is enabled to be broken by means of the cutting edge (17) under the influence of a pressure force imparted again on the neck bearing (3) as a result of the outward projection of the end section of the screw (12) in this gap (see Figure-13).

Another alternative embodiment is depicted in Figure-10 and 11. Again, the safety screw (12) is screwed into the gas release gap (18) formed on the carrier body (1). However, this time the screw attachment process takes place in a way to remain below the lower surface (2.1) of the shaft (2). As a result of the application of a force which is greater than the predetermined course and force on the shaft (2), the cutting edge (17) of the lower surface (2.1) breaks the screw and enables the release of the gas into the surrounding environment. This is provided by means of the gas outlet channel (15) formed inside the screw (12). Again, the breaking action takes place via the shock surface (3.3) formed on the screw (12).

A gas release gap (18) is formed on said carrier body (1), a safety screw (12) with a structure longer than the wall thickness of the carrier body (1) is positioned into said gap (18), said screw (12) has the gas outlet channel (15) and the lengthwise distance of said channel (15) is longer than the wall thickness of the carrier body (1), and the rear surface (12.2) of said screw (12) has a closed surface. Further, the top surface (3.2) of the neck bearing (3) is at an elevation that is higher than the top surface (1.3) of the carrier body (1).

As another innovation provided in the gas spring apparatus according to the invention, the gas release gaps (18) are formed on the carrier body (1) or the shaft (2). Said gaps are covered with thermal solder (14) or with a material that is unable to endure high temperature. Here, it is aimed to enable the discharge of the gas that expands in the case of the gas spring being located in a zone with high heat or of the formation of high heat due to the operation. The placement is carried out by in-situ soldering, attachment by screw, tight engagement or any other means. The melting point is obtained by way of the selection of the material according to the desired temperature. The solder cross-sectional thickness is selected based on the shape of the cross-section, type of application, interior pressure and the volume. In order to provide the gas discharge, the solder is positioned such that it will include the gas release channel in a way to provide the transition from the high-pressure zone to the low-pressure environment.

A gas release gap (20) is formed on said carrier body (1), a safety screw (12) with a structure longer than the wall thickness of the carrier body (1) is positioned into said gap (20), said screw (12) has the gas outlet channel (15) and the lengthwise distance of said channel (15) is longer than the wall thickness of the carrier body (1), and the rear surface (12.2) of said screw (12) has a closed surface. Further, the top surface (3.2) of the neck bearing (3) is at an elevation that is higher than the top surface (1.3) of the carrier body (1).

As another innovation provided in the gas spring apparatus according to the invention, the gas release gaps (20) are formed on the carrier body (1) or the shaft (2). Said gaps are covered with thermal solder (14) or with a material that is unable to endure high temperature. Here, it is aimed to enable the discharge of the gas that expands in the case of the gas spring being located in a zone with high heat or of the formation of high heat due to the operation. The placement is carried out by in-situ soldering, attachment by screw, tight engagement or any other means. The melting point is obtained by way of the selection of the material according to the desired temperature. The solder cross-sectional thickness is selected based on the shape of the cross-section, type of application, interior pressure and the volume. In order to provide the gas discharge, the solder is positioned such that it will include the gas release channel in a way to provide the transition from the high-pressure zone to the low-pressure environment.

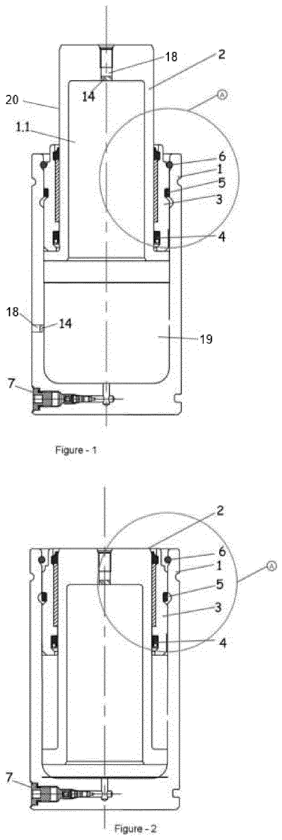

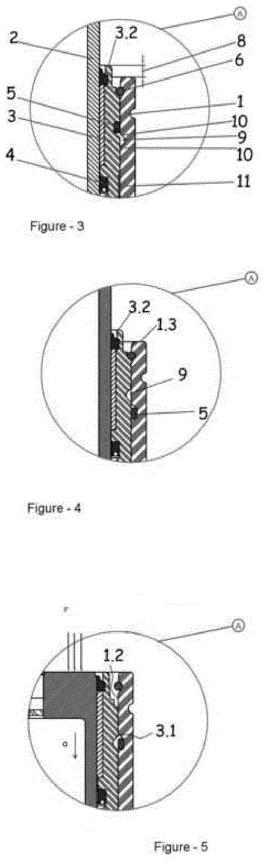

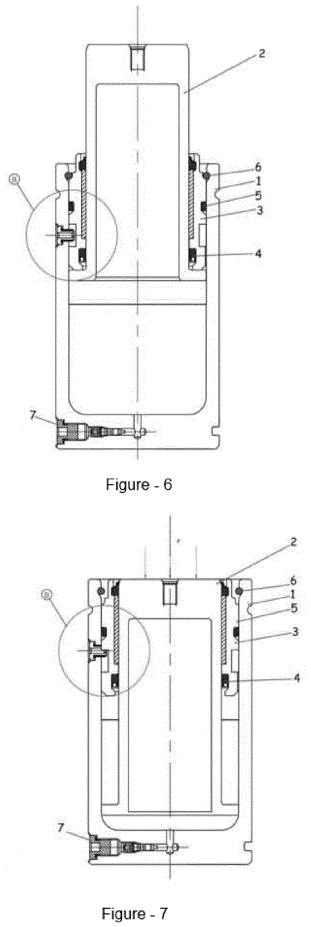

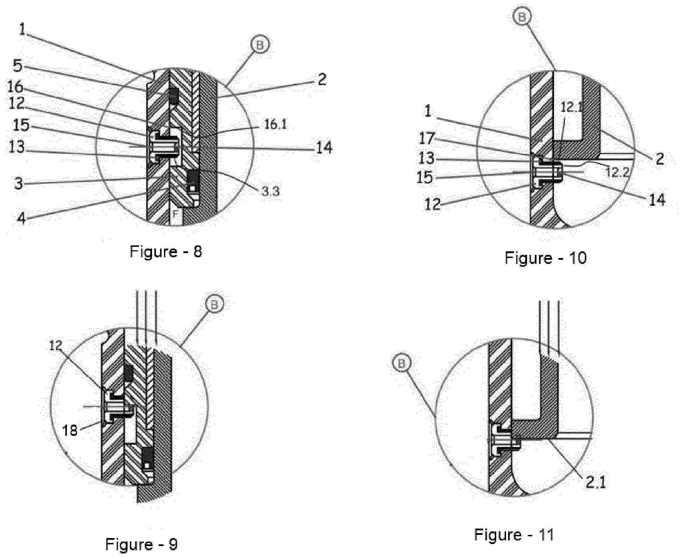

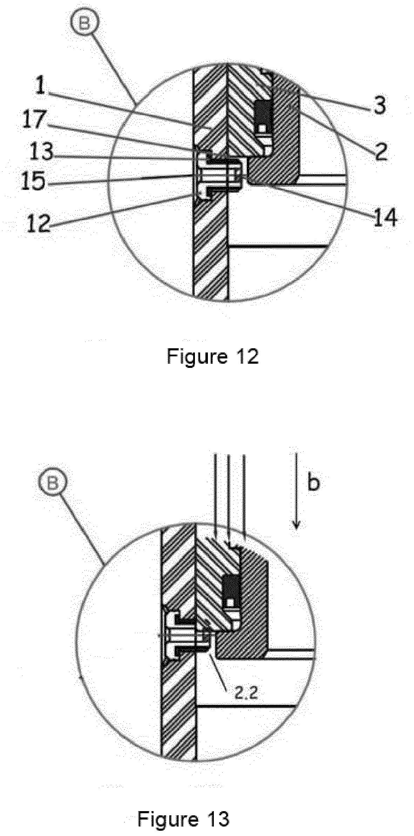

## Claims

1. A gas spring safety apparatus comprising a carrier body (1) with a gas gap (1.1) formed inside, where pressurized gas (19) is stored by means of filling kit (7),
- a shaft (2) moved upwards and downwards in a linear manner within the gas gap (1.1) of said carrier body (1),
- and seal rings (4), wire ring (6) and neck bearing (3) positioned between said carrier body (1) and operating surfaces (20) of the shaft (2)
**characterized in that** it comprises
- at least one safety channel (9) formed on inner surface (1.2) of the carrier body (1) and/or outer surface (3.1) of neck bearing (3),
- and a safety elevation (8) formed such that top surface (3.2) of said neck bearing (3) is positioned higher than top surface (1.3) of carrier body (1) to provide exit of the pressurized gas (19) from said safety channel (9) and to affect via the top surface (3.2) of the neck bearing (3), thereby providing the downward movement of the neck bearing (3),
- at least one sealing element (5), positioned next to said safety channels (9), seated into said channel (9) as a result of a force being applied from the top onto the neck bearing (3),
with the aim of preventing the pressurized gas (19) within the carrier body (1) from destroying the body (1) due to the pressure, as a result of a more than necessary course-force being applied on said shaft (2) and enabling the release of the gas (19) inside the gas gap (1.1) to the outside.

2. A gas spring safety apparatus according to claim 1 **characterized in that** it comprises the surfaces with radius (10) formed on said safety channel (9).

3. A gas spring safety apparatus according to Claims 1 and 2 **characterized in that** it comprises an outlet channel (11) formed between said carrier body (1) and the neck bearing (3).

4. A gas spring safety apparatus comprising a carrier body (1) with a gas gap (1.1) formed inside, where pressurized gas (19) is stored by means of filling kit (7), a shaft (2) moved upwards and downwards in a linear manner within the gas gap (1.1) of said carrier body (1), and seal rings (4), wire ring (6) and neck bearing (3) positioned between said carrier body (1) and operating surfaces (20) of the shaft (2) **characterized in that** it comprises a safety elevation (8) formed to affect via top surface (3.2) of the neck bearing (3), thereby providing downward movement of the neck bearing (3); a cutting channel (16) having a cutting surface (16.1) formed on said neck bearing (3); a safety screw (12) having a gas outlet channel (15), on shock surface (12.1) of which force is applied via said cutting surface (16.1); a gas release channel (18) where this screw (12) is positioned; with the aim of preventing the pressurized gas (19) within the carrier body (1) from destroying the body (1) due to the pressure, as a result of a more than necessary course-force being applied on said shaft (2) and enabling the release of the gas (19) inside the gas gap (1.1) to the outside.

5. A gas spring safety apparatus according to Claim 4 **characterized in that** it comprises an o-ring (13) formed on said safety screw (12).

6. An apparatus according to Claim 4 **characterized in that** it comprises a pressure gap (2.2) formed to act on the shock surface (12.1) of said safety screw (12) via the shock surface of the neck bearing (3).

7. An apparatus according to Claim 4 **characterized in that** it comprises a thermal solder (14) positioned inside of the safety screw (12) positioned in said gas release channel (18).

## Patentansprüche

1. Gasfedersicherheitsvorrichtung, umfassend einen Trägerkörper (1) mit einer darin gebildeten Gaslücke (1.1), in der unter Druck gesetztes Gas (19) mit Hilfe eines Füllsets (7) gespeichert ist,
- eine Welle (2), die auf eine lineare Weise innerhalb der Gaslücke (1.1) des Trägerkörpers (1) nach oben und unten bewegt wird,
- und Dichtungsringe (4), einen Drahtring (6) und ein Halslager (3), die zwischen dem Trägerkörper (1) und Arbeitsoberflächen (20) der Welle (2) positioniert sind,
**dadurch gekennzeichnet, dass** sie Folgendes umfasst:
- mindestens einen Sicherheitskanal (9), der an der Innenfläche (1.2) des Trägerkörpers (1) und/oder Außenfläche (3.1) des Halslagers (3) gebildet ist,
- und eine Sicherheitserhebung (8), die derart gebildet ist, dass eine Oberseite (3.2) des Halslagers (3) höher als die Oberseite (1.3) des Trägerkörpers (1) positioniert ist, um einen Auslass des unter Druck gesetzten Gases (19) aus dem Sicherheitskanal (9) bereitzustellen und über die Oberseite (3.2) des Halslagers (3) zu beeinflussen, wodurch die Abwärtsbewegung des Halslagers (3) bereitgestellt wird,
- mindestens ein Dichtungselement (5), das neben den Sicherheitskanälen (9) positioniert ist, als ein Ergebnis einer Kraft, die von oben auf das Halslager (3) ausgeübt wird, in den Kanal (9) gesetzt,
mit dem Ziel, zu verhindern, dass das unter Druck gesetzte Gas (19) innerhalb des Trägerkörpers (1) als ein Ergebnis dessen, dass mehr als eine erforderliche Kurskraft auf die Welle (2) ausgeübt wird, den Körper (1) aufgrund des Drucks zerstört, und dass die Freisetzung des Gases (19) innerhalb der Gaslücke (1.1) nach außen ermöglicht wird.

2. Gasfedersicherheitsvorrichtung nach Anspruch 1, **dadurch gekennzeichnet, dass** sie die Flächen mit Radius (10) gebildet auf dem Sicherheitskanal (9) umfasst.

3. Gasfedersicherheitsvorrichtung nach Anspruch 1 und 2, **dadurch gekennzeichnet, dass** sie einen Auslasskanal (11) umfasst, der zwischen dem Trägerkörper (1) und dem Halslager (3) gebildet ist.

4. Gasfedersicherheitsvorrichtung, umfassend einen Trägerkörper (1) mit einer darin gebildeten Gaslücke (1.1), in der unter Druck gesetztes Gas (19) mit Hilfe eines Füllsets (7) gespeichert ist, eine Welle (2), die auf eine lineare Weise innerhalb der Gaslücke (1.1) des Trägerkörpers (1) nach oben und unten bewegt wird, und Dichtungsringe (4), einen Drahtring (6) und ein Halslager (3), die zwischen dem Trägerkörper (1) und Arbeitsoberflächen (20) der Welle (2) positioniert sind, **dadurch gekennzeichnet, dass** sie eine Sicherheitsergebung (8) umfasst, die gebildet ist, um über die Oberseite (3.2) des Halslagers (3) zu beeinflussen, wodurch die Abwärtsbewegung des Halslagers (3) bereitgestellt wird; einen Schneidekanal (16), der eine Schneidfläche (16.1) aufweist, die an dem Halslager (3) gebildet ist; eine Sicherheitsschraube (12), die einen Gasauslasskanal (15) aufweist, an der Stoßoberfläche (12.1), auf die Kraft über die Schneidfläche (16.1) ausgeübt wird, einen Gasfreisetzungskanal (18), wo diese Schraube (12) positioniert ist, mit dem Ziel, zu verhindern, dass das unter Druck gesetzte Gas (19) innerhalb des Trägerkörpers (1) als ein Ergebnis dessen, dass mehr als eine erforderliche Kurskraft auf die Welle (2) ausgeübt wird, den Körper (1) aufgrund des Drucks zerstört, und dass die Freisetzung des Gases (19) innerhalb der Gaslücke (1.1) nach außen ermöglicht wird.

5. Gasfedersicherheitsvorrichtung nach Anspruch 4, **dadurch gekennzeichnet, dass** sie einen an der Sicherheitsschraube (12) gebildeten O-Ring (13) umfasst.

6. Vorrichtung nach Anspruch 4, **dadurch gekennzeichnet, dass** sie eine Drucklücke (2.2) umfasst, die gebildet ist, um über die Stoßoberfläche des Halslagers (3) auf die Stoßoberfläche (12.1) der Sicherheitsschraube (12) zu wirken.

7. Vorrichtung nach Anspruch 4, **dadurch gekennzeichnet, dass** sie ein thermisches Lot (14) umfasst, das innerhalb der Sicherheitsschraube (12) positioniert ist, die in dem Gasfreisetzungskanal (18) positioniert ist.

## Revendications

1. Appareil de sécurité de ressort à gaz comprenant un corps de support (1) avec un espace de gaz (1.1), formé à l'intérieur, où le gaz sous pression (19) est stocké au moyen d'un ensemble de remplissage (7),
- un arbre (2) déplacé vers le haut et vers le bas de manière linéaire dans l'espace de gaz (1.1) dudit corps de support (1),
- et des bagues d'étanchéité (4), une bague de fil métallique (6) et un palier à collet (3) positionné entre ledit corps de support (1) et des surfaces de fonctionnement (20) de l'arbre (2) **caractérisé en ce qu'**il comprend
- au moins un canal de sécurité (9) formé sur une surface interne (1.2) du corps de support (1) et/ou sur une surface externe (3.1) du palier à collet (3),
- et une hauteur de sécurité (8) formée de sorte que la surface supérieure (3.2) dudit palier à collet (3) soit placée plus haut qu'une surface supérieure (1.3) du corps de support (1) pour fournir une sortie pour le gaz sous pression (19) depuis ledit canal de sécurité (9) et pour avoir un effet par l'intermédiaire de la surface supérieure (3.2) du palier à collet (3), fournissant ainsi le mouvement vers le bas du palier à collet (3),
- au moins un élément d'étanchéité (5) positionné à côté desdits canaux de sécurité (9), assis dans ledit canal (9) du fait d'une force appliquée à partir du haut sur le palier à collet (3),
dans le but d'empêcher le gaz sous pression (19) dans le corps de support (1) de détruire le corps (1) en raison de la pression, du fait d'une force-course supérieur à ce qui est nécessaire appliquée sur ledit arbre (2) et de permettre la libération du gaz (19) à l'intérieur de l'espace de gaz (1. 1) vers l'extérieur.

2. Appareil de sécurité de ressort à gaz selon la revendication 1, **caractérisée en ce qu'**il comprend les surfaces avec un rayon (10) formé sur ledit canal de sécurité (9).

3. Appareil de sécurité de ressort à gaz selon les revendications 1 et 2 **caractérisé en ce qu'**il comprend un canal de sortie (11) formé entre ledit corps de support (1) et le palier à collet (3).

4. Appareil de sécurité de ressort à gaz comprenant un corps de support (1) avec un espace de gaz (1.1) formé à l'intérieur où le gaz sous pression (19) est stocké au moyen d'un ensemble de remplissage (7), un arbre (2) déplacé vers le haut et vers le bas de manière linéaire dans l'espace de gaz (1.1) dudit corps de support (1) et des bagues d'étanchéité (4), une bague de fil métallique (6) et un palier à collet (3) positionné entre le corps de support (1) et des surfaces de fonctionnement (20) de l'arbre (2) **caractérisé en ce qu'**il comprend une hauteur de sécurité (8) formée pour avoir un effet par l'intermédiaire de la surface supérieure (3.2) du palier à collet (3), fournissant ainsi un mouvement vers le bas du palier à collet (3) ; un canal de coupe (16) possédant une surface de coupe (16.1) formée sur ledit palier à collet (3) ; une vis de sécurité (12) possédant un canal de sortie de gaz (15) sur une surface de choc (12.1) sur laquelle la force est appliquée par l'intermédiaire de ladite surface de coupe (16.1) ; un canal de sortie de gaz (18) où cette vis (12) est positionnée dans le but d'empêcher le gaz sous pression (19) dans le corps de support (1) de détruire le corps (1) en raison de la pression, du fait d'une force-course supérieur à ce qui est nécessaire appliquée sur ledit arbre (2) et de permettre la libération du gaz (19) à l'intérieur de l'espace de gaz (1.1) vers l'extérieur.

5. Appareil de sécurité de ressort à gaz selon la revendication 4, **caractérisé en ce qu'**il comprend un joint torique (13) formé sur ladite vis de sécurité (12).

6. Appareil selon la revendication 4, **caractérisé en ce qu'**il comprend un espace de pression (2.2) formé pour agir sur la surface de choc (12.1) de ladite vis de sécurité (12) par l'intermédiaire de la surface de choc du palier à collet (3).

7. Appareil selon la revendication 4, **caractérisé en ce qu'**il comprend une soudure thermique (14) positionnée à l'intérieur de la vis de sécurité (12) positionnée dans le canal de libération de gaz (18).
